Europäisches Patentamt

European Patent Office

Office européen des brevets

(19)

(11) Veröffentlichungsnummer: **0 208 843**

**A2**

(12) # EUROPÄISCHE PATENTANMELDUNG

(21) Anmeldenummer: 86105028.4

(22) Anmeldetag: 11.04.86

(51) Int. Cl.⁴: **H04L 27/12**

(30) Priorität: 13.07.85 DE 3525125

(43) Veröffentlichungstag der Anmeldung:
21.01.87 Patentblatt 87/04

(84) Benannte Vertragsstaaten:
**CH DE FR GB IT LI NL SE**

(71) Anmelder: BBC Aktiengesellschaft Brown,
Boveri & Cie.
Haselstrasse
CH-5401 Baden(CH)

(72) Erfinder: Guzman-Edery, Jorge, Dipl.-Ing.
Blumenstrasse 4
D-6805 Heddesheim(DE)
Erfinder: Steiger, Wolfgang, Dipl.-Ing.
Carl-Lepper-Strasse 10
D-6840 Lampertheim(DE)

(74) Vertreter: Kempe, Wolfgang, Dr. et al
c/o Brown, Boveri & Cie AG Postfach 351
D-6800 Mannheim 1(DE)

(54) Verfahren und Einrichtung zur Übertragung binärer Datensignale durch Frequenzumtastung.

(57) Mit der Erfindung wird ein Verfahren und eine Einrichtung zur Realisierung eines FSK-Modulators - (1) vorgeschlagen, der programmierbar und daher ohne hardware-Änderung auf beliebige Kennfrequenzen ($f_1$ und $f_2$) einstellbar ist und sich durch hohe Frequenzstabilität auszeichnet. Die bei Frequenzumtastung erforderlichen Frequenzen ($f_1$ und $f_2$) werden eingestellt durch Programmierung entsprechender Periodendauern (T1 und T2) in einem Speicher (2), der durch einen freilaufenden, quarzgesteuerten Zähler (3) sowie durch die binären Eingangsdaten adressiert wird. Durch den Zähler (3) gesteuert werden die Speicherplätze nacheinander abgetastet bis ein Speicherplatz erreicht ist, der eine der Periodendauern (T1 oder T2) markiert. Daraufhin wird der Zähler (3) zurückgesetzt und ein Impuls ausgelöst, der eine D-Flipflopstufe (6) ansteuert, mit der die Kennfrequenz ($f_1$ bzw. $f_2$) erzeugt wird. Die Periodendauern (T1 und T2) sind in zwei Speicherbereichen - (I und II) festgelegt, die aufgrund der am Eingang - (E) anstehenden binären Daten ausgewählt werden.

EP 0 208 843 A2

Fig 1

## Verfahren und Einrichtung zur Übertragung binärer Datensignale durch Frequenzumtastung

Die Erfindung bezieht sich auf ein Verfahren zur Übertragung binärer Datensignale durch Frequenzumtastung gemäß dem Oberbegriff des Anspruchs 1 sowie auf eine Einrichtung zur Durchführung des Verfahrens.

Verfahren zur Übertragung binärer Datensignale durch Frequenzumtastung sind allgemein bekannt, auch unter der englischen Bezeichnung "FSK" (frequency shift keying). Diese Verfahren zählen zu Frequenzmodulationsverfahren, wobei in einem FSK-Modulator lediglich zwei Kennfrequenzen erzeugt werden müssen zur Darstellung der binären Zustände 1 und 0 der zu übertragenden Zeichen. Diese Kennfrequenzen sind aufzufassen als durch Änderung einer Trägerfrequenz $f_T$ um den Frequenzhub $f_h$ entstandene shift-Frequenzen. In den CCITT-Empfehlungen V.1 ist festgelegt, daß die binäre 1 der niedrigeren Frequenz $f_1 = f_T-f_h$ und die binäre 0 der höheren Frequenz $f_2 = f_T + f_h$ entspricht. Der belegte Frequenzbereich $f_T \pm f_h$ stellt einen Übertragungskanal dar. Die Breite der Kanäle hängt von der Übertragungsgeschwindigkeit (Baud-Rate) und der Anzahl der Kanäle innerhalb der z.B. in der Wechselstromtelegraphie zur Verfügung stehenden gesamten Bandbreite von 300 bis 3400Hz ab.

FSK-Modulatoren müssen auf die Kennfrequenzen $f_1$ und $f_2$ einstellbar sein und sollen umstellbar sein auf verschiedene Kanäle. Solche FSK-Modulatoren sind bereits auf unterschiedliche Weise realisiert worden, z.B. mit PLL-Bauelementen, RC-Oszillatoren, analogen Modulatoren (aktiv und passiv), Sinusgeneratoren und Frequenz-Synthesizer - (Teiler, Mischer). In der Zeitschrift "Electronics", 5. Juni 1972, Seite 161 ist eine als integrierter Baustein ausgeführte PLL-Schaltung beschrieben, die als FSK-Modulator oder Demodulator einsetzbar ist. Zur Festlegung der Arbeitsfrequenzen wird der Baustein von außen mit Kondensatoren und Widerständen beschaltet.

Nachteile der bekannten FSK-Modulatoren bestehen darin, daß die Frequenzgenauigkeiten von passiven Bauelementen abhängig ist und damit Einflüssen durch Alterung und Umweltbedingungen, wie Temperatur und Feuchte. Zum Frequenzwechsel ist ein Austausch von Bauelementen erforderlich. Der Schaltungsaufwand ist relativ hoch.

Der Erfindung liegt die Aufgabe zugrunde, ein Verfahren zur Übertragung binärer Datensignale durch Frequenzumtastung anzugeben, das die genannten Nachteile vermeidet. Außerdem soll eine Einrichtung zur Durchführung des Verfahrens angegeben werden.

Diese Aufgabe wird bei einem Verfahren nach dem Oberbegriff des Anspruchs 1 durch die kennzeichnenden Merkmale des Anspruchs 1 gelöst. Vorteilhafte Ausgestaltungen und eine Einrichtung zur Durchführung des Verfahrens sind in weiteren Ansprüchen angegeben.

Vorteile des erfindungsgemäßen Verfahrens bestehen u.a. darin, daß die Kennfrequenzen $f_1$ und $f_2$ durch Programmierung eines Speichers festlegbar sind und nach einer vorteilhaften Ausgestaltung ein Kanalwechsel durch einfache Umschaltung auf eine andere Spalte des in Zeilen und Spalten strukturierten Speichers erfolgen kann. Ein erfindungsgemäßer FSK-Modulator zur Durchführung dieses Verfahrens zeichnet sich durch einen einfachen Aufbau und hohe Frequenzstabilität aus. Eine genauere Beschreibung der Erfindung erfolgt anhand eines Ausführungsbeispiels und der Zeichnung. Daraus sind auch noch weitere Vorteile der Erfindung ersichtlich.

Es zeigt:

Fig. 1 einen erfindungsgemäßen FSK-Modulator,

Fig. 2a Impulse am Takteingang einer zweiten D-Flipflopstufe im FSK-Modulator,

Fig. 2b Impulse am Ausgang der zweiten D-Flipflopstufe,

Fig. 3a binäre Daten am Eingang E des FSK-Modulators,

Fig. 3b frequenzmoduliertes Signal am Ausgang A des FSK-Modulators.

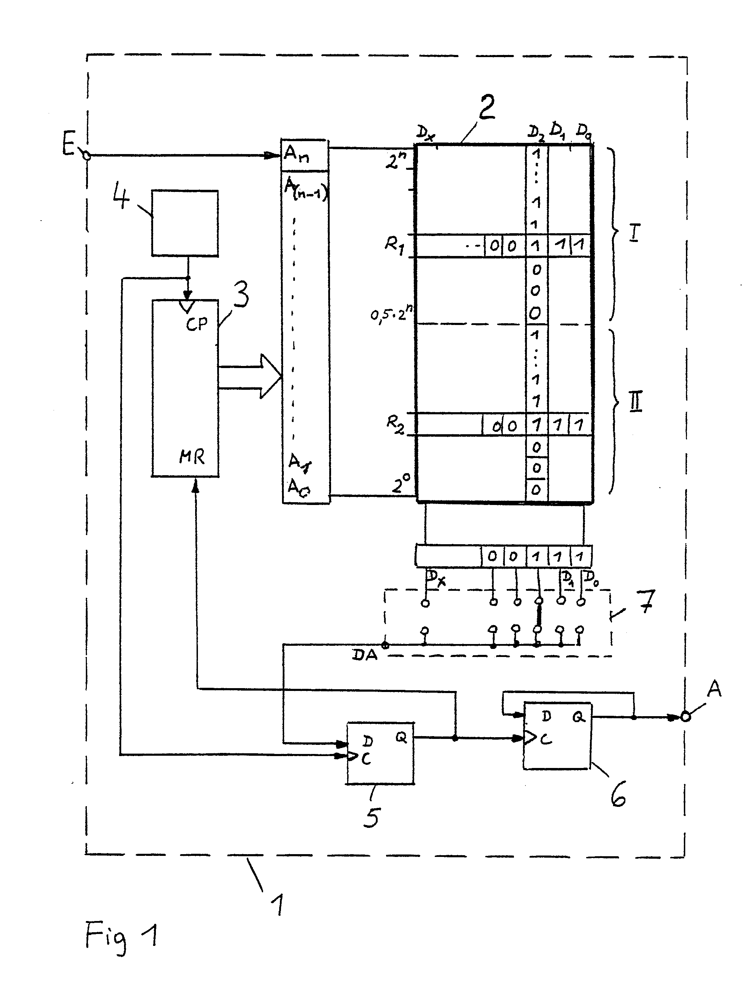

Fig. 1 zeigt den Aufbau eines erfindungsgemäßen FSK-Modulators 1. Der Modulator 1 enthält einen byteorientierten programmierbaren Speicher 2, einen Zähler 3, einen Taktgeber 4, eine erste D-Flipflop-Stufe 5 und eine zweite D-Flipflop-Stufe 6.

Der Ausgang des quarzgesteuerten Taktgebers 4 ist auf einen Zähleingang CP des Zählers 3 geführt. Ausgänge des Zählers 3, die den jeweiligen Zählerstand wiedergeben, sind mit Adressierungseingängen $A_0$ bis $A_{n-1}$ des Speichers 2 verbunden. Im Ausführungsbeispiel handelt es sich um ein byteorientiertes PROM, es sind jedoch auch andere programmierbare Speicher geeignet. Wenn man auf die Möglichkeit zur Umschaltung auf einen anderen Kanal verzichtet, kann auch ein bitorganisierter programmierbarer Speicher verwendet werden.

Der Speicher 2 weist in üblicher Weise $2^n$ Reihen und x Spalten auf. Die Reihen werden durch die Adresseneingänge $A_0$ bis $A_n$ angesteuert und das in der angesteuerten Reihe gespeicherte Datenbyte wird auf die Datenausgänge $D_0$ bis $D_x$ gegeben.

Die Datenausgänge $D_0$ bis $D_x$ des Speichers 3 sind auf eine Einrichtung 7 zur Auswahl eines der Ausgänge $D_0$ bis $D_x$ geführt. Bei der Einrichtung 7 kann es sich um Lötstifte handeln, in die eine Brücke eingelötet wird, wie in der Zeichnung dargestellt, oder um einen Umschalter zur Auswahl einer der mit den Ausgängen $D_0$ bis $D_x$ korrespondierenden Spalten $D_0$ bis $D_x$.

Der Ausgang DA der Auswahleinrichtung 7 ist mit einem Dateneingang D der ersten D-Flipflopstufe 5 verbunden. Ein Takteingang C dieser Flipflopstufe 5 ist mit dem Ausgang des Taktgebers 4 verbunden. Der Ausgang Q der ersten Flipflopstufe 5 ist auf den Rücksetzeingang MR des Zählers 3 und außerdem auf den Takteingang C der zweiten D-Flipflopstufe 6 geführt. Der Ausgang $\overline{Q}$ der zweiten Flipflopstufe 6 ist auf deren Dateneingang D rückgeführt und bildet außerdem den Ausgang A des FSK-Modulators 1. Der Eingang E des FSK-Modulators 1 ist auf einen Adresseneingang $A_n$ des Speichers 2 geführt.

Die Funktion des zuvor bezüglich des Aufbaus beschriebenen FSK-Modulators 1 wird nachstehend erläutert.

Der FSK-Modulator 1 hat die Aufgabe, binäre Daten, die als Folge von einzelnen 0-Signalen am Eingang E des FSK-Modulators 1 eingegeben werden, umzusetzen in Frequenzen $f_1$ bzw. $f_2$, die am Ausgang A ausgegeben werden sollen. Im Speicher 2 sind die halben Periodendauern der Frequenzen $f_1$ und $f_2$ programmiert, und zwar entsprechend der niedrigeren Frequenz $f_1$, die längere halbe Periode $T_1$ in einem oberen Speicherbereich I, der die obere Hälfte der Adressen umfaßt und die kürzere halbe Periode $T_2$ in einem unteren Speicherbereich II, der die Adressen im unteren Bereich, als bei $2^6$ beginnend, umfaßt. Die Speicherung der halben Periodendauern $T_1$ und $T_2$ erfolgt für mehrere Kanäle durch eine Programmierung in den Spalten $D_0$ bis $D_x$. Zu einem Kanal gehörenden Periodendauern $T_1$ und $T_2$ sind in einer Spalte programmiert. Mit Hilfe der Auswahleinrichtung 7 wird nur eine der Spalten $D_0$ bis $D_x$ ausgewählt. Von den in einer Reihe gespeicherten Datenbytes wird also jeweils nur ein Bit genutzt.

Die Adressierung des Speichers erfolgt durch den Zähler 3 und die vom Eingang E kommenden Daten. Da die Daten den höchstwertigen Adresseneingang $A_n$ ansteuern, bestimmen sie, ob eine Reihe im unteren Speicherbereich II oder im oberen Speicherbereich I angesteuert wird.

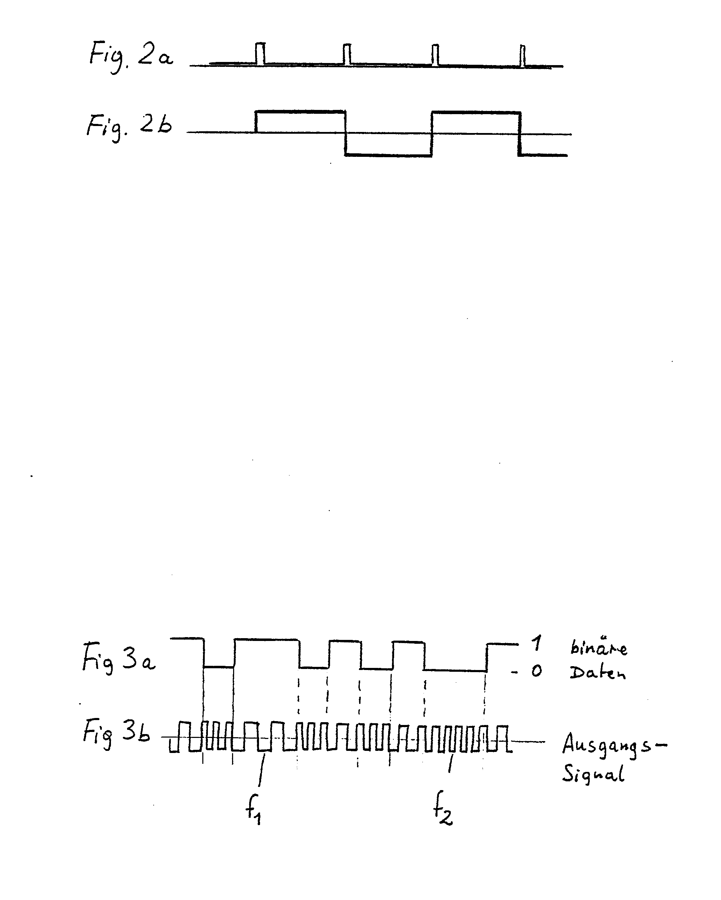

Der Zähler 3 zählt im Takt des Taktgebers 4 vorwärts bei 0 beginnend. Jeder Zählschritt stellt eine Adresse zur Ansteuerung einer Reihe des Speichers 2 dar. Nimmt man an, daß die vom Eingang E kommende Datenleitung eine 0 liefert, so werden durch den Zähler 3 Adressen im unteren Speicherbereich II angesteuert und der Speicherinhalt der angesteuerten Reihe auf den Ausgang gegeben. Der Inhalt der Speicherzelle der ausgewählten Spalte, im dargestellten Beispiel der Spalte $D_2$, gelangt auf den Dateneingang D der ersten Flipflopstufe 5. Die Speicherzellen der unteren Reihen des unteren Speicherbereichs II enthalten eine 0, die von der ersten D-Flipflopstufe 5 weitergeleitet wird. Wenn ein Zählerstand und damit eine PROM-Adresse erreicht ist, die einer Reihe R2 entspricht, in der eine 1 in der Spalte $D_2$ gespeichert ist, wird die 1 auf den Dateneingang D der ersten Flipflopstufe 5 gegeben. Durch den Taktgeber 4 ist die erste Flipflopstufe 5 mit dem Zähler 3 synchronisiert. Am Ausgang Q der ersten Flipflopstufe 5 erscheint eine 1, die den Zähler 3 zurücksetzt und außerdem auf die zweite D-Flipflopstufe 6 geführt ist. Durch diese zweite D-Flipflopstufe 6 wird die Frequenz halbiert auf den gewünschten Wert $f_2$. Die Rückkopplung des Ausgangs auf den Dateneingang D der zweiten Flipflopstufe 6 bewirkt, daß bei jedem zweiten Impuls am Eingang die Polarität des Ausgangs wechselt. Die Impulse am Dateneingang D der zweiten Flipflopstufe 6 sind in Fig. 2a dargestellt. Fig. 2b zeigt die Impulse am Ausgang $\overline{Q}$ der zweiten Flipflopstufe 6. Daraus ist ersichtlich, daß die zweite D-Flipflopstufe 6 als 1:2-Frequenzteiler wirkt.

Da der Zähler 3 zurückgesetzt wurde, beginnt er wieder bei 0 zu zählen, bis erneut ein Zählerstand erreicht ist, der der Reihe R2 entspricht, wodurch der nächste Impuls am Eingang der zweiten Flipflopstufe 6 entsteht, wie in Fig. 2a dargestellt.

Wenn der binäre Zustand der Daten am Eingang E auf ein 1 wechselt, entsprechen die durch den Zählerstand und den Datenzustand gebildeten Adressen den Reihenadressen im oberen Speicherbereich 1. Der Zählerstand 0 entspricht jetzt nicht mehr der Adresse der ersten Reihe im unteren Speicherbereich II, sondern der untersten Reihe im Speicherbereich I. Im übrigen läuft der gleiche Vorgang wie zuvor beschrieben weiter. Gesteuert durch den Zähler 3 wird nacheinander der Inhalt der Spalte $D_2$ auf die erste Flipflopstufe 5 gegeben bis eine Reihe R1 erreicht ist, die in der Zelle der Spalte $D_2$ eine 1 enthält, wodurch die Periodendauer $T_1$ markiert ist und eine Rücksetzung des Zählers 3 erfolgt. Der Abstand der Reihe R1 von der Ausgangsreihe $0,5 \times 2^n$ ist größer als der Abstand zwi_schen der Reihe R2 und der Ausgangsreihe 0, d.h. es liegen mehr Reihen dazwischen. Das bedeutet, daß die Periode T1 länger ist als die Periode T2.

Im Ergebnis entsteht eine zur Folge von binären Daten gemäß Fig. 3a äquivalente Folge von Frequenzen $f_1$ bzw. $f_2$ gemäß Fig. 3b. Fig. 3b zeigt das Rechtecksignal am Ausgang A des FSK-Modulators. Dieses Signal kann durch nachgeschaltete Filter in bekannter Weise in eine Sinusform gebracht werden.

Im normalen Betrieb kann der Zähler 3 jeweils nur soweit hochzählen bis die Adresse der Reihe R1 oder R2 erreicht ist. Es ist jedoch möglich, daß zu einem Zeitpunkt, zu dem im Speicherbereich I eine Reihe kurz vor der Reihe R1 adressiert wird, ein Datensprung von 1 auf 0 eintritt, worauf die Speicheraddressierung in den unteren Speicherbereich II springt. Die jetzt addressierte Speicherreihe könnte über der Reihe R2 liegen. Wenn in den Zellen der Spalte $D_2$ oderhalb der Reihe R2 eine Null gespeichert wäre, so würde der Zähler 3 immer weiter zählen, bis nach einem Überlauf wieder die Reihe R2 erreicht wäre. Um ein solches Verhalten des Zählers 3 zu vermeiden, wird in die oberhalb der Reihe R2 liegenden Zellen der Spalte $D_2$ (und entsprechend in den anderen Spalten) der Wert 1 programmiert. Es empfiehlt sich, auch in Reihen oberhalb der Reihe R1 im Speicherbereich I eine 1 zu programmieren. Dadurch wird bei jedem Takt nach Überschreitung einer der Reihen R1 oder R2 auf jeden Fall ein Rücksetzimpuls ausgelöst.

Es ist zweckmäßig, mit den binären Daten den höchstwertigen Adresseneingang $A_n$ zu steuern, wie vorstehend beschrieben. Möglich wäre jedoch auch die Ansteuerung ei nes der übrigen Adresseneingänge $A_0$ bis $A_{(n-1)}$ durch die binären Daten. Die Markierungen für die halben Periodendauern für die Frequenzen $f_1$ und $f_2$ müßten dann in den dadurch gewählten Speichersektoren vorgesehen werden.

## Ansprüche

1. Verfahren zur Übertragung binärer Datensignale durch Frequenzumtastung (frequency shift keying -FSK), wobei ein binäres Datensignal 1 durch eine erste Frequenz ($f_1$) und ein binäres Datensignal 0 durch eine zweite Frequenz ($f_2$) dargestellt wird, dadurch gekennzeichnet, daß

-die binären Datensignale einen ersten Adresseneingang eines programmierbaren Speichers ansteuern, in dem die halben Periodendauern der beiden Frequenzen ($f_1$ und $f_2$) in zwei Speicherbereichen (I und II) markiert sind, die durch den ersten Adresseneingang angesteuert werden,

-weitere Adresseneingänge durch einen freilaufenden Zähler gesteuert werden,

-bei Adressierung einer Speicherzelle, in der eine der halben Periodendauern markiert ist, jeweils ein Impuls erzeugt wird, der den Zähler zurücksetzt und außerdem einen 1:2-Frequenzteiler steuert, der an seinem Ausgang eine der beiden Frequenzen ($f_1$ oder $f_2$) abgibt.

2. Verfahren nach Anspruch 1, dadurch gekennzeichnet, daß die binären Daten den Adresseneingang für das höchstwertige Bit steuern, wodurch der Speicher in zwei Bereiche (I und II) unterteilt wird, in denen je eine der halben Periodendauern markiert ist.

3. FSK-Modulator zur Durchführung des Verfahrens nach Anspruch 1, dadurch gekennzeichnet, daß

-der Modulator (1) einen programmierbaren Speicher (2) enthält, der in mindestens einer Speicherzelle in einem ersten Speicherbereich I eine Markierung der halben Periodendauer der Frequenz ($f_1$) und in mindestens einer Speicherzelle in einem zweiten Speicherbereich II eine Markierung der halben Periodendauer der Frequenz ($f_2$) enthält,

-ein erster Adresseneingang ($A_n$) des Speichers (2) mit dem Eingang (E) für die binären Datensignale verbunden ist,

-weitere Adresseneingänge ($A_0$ bis $A_{n-1}$) des Speichers (2) mit Ausgängen eines Zählers (3) verbunden sind,

-der Datenausgang (DA) des Speichers (2) mit dem Dateneingang (D) einer ersten D-Flipflopstufe (5) verbunden ist, deren Takteingang (C) mit einem Taktgeber (4) verbunden ist, der auch den Zähler (3) steuert,

-der Ausgang (Q) der ersten D-Flipflopstufe (5) mit einer zweiten als 1:2-Frequenzteiler betriebenen D-Flipflopstufe (6) und außerdem auf einen Rücksetzeingang (MR) des Zählers (3) geführt ist und

-der Ausgang ($\overline{Q}$) der zweiten D-Flipflopstufe (6) mit dem Ausgang (A) des Modulators (1) verbunden ist.

4. FSK-Modulator nach Anspruch 3, dadurch gekennzeichnet, daß die Markierung der halben Periodendauer durch Speicherung einer 1 erfolgt und die übrigen Speicherzellen eine 0 enthalten.

5. FSK-Modulator nach Anspruch 3 oder 4, dadurch gekennzeichnet, daß es sich bei dem ersten Adresseneingang ($A_n$), der mit dem Dateneingang (E) verbunden ist, um den höchstwertigen Adresseneingang ($A_n$) des Speichers (2) handelt.

6. FSK-Modulator nach einem der Ansprüche 3 bis 5, dadurch gekennzeichnet, daß der Taktgeber (4) quarzgesteuert ist.

7. FSK-Modulator nach einem der Ansprüche 3 bis 6, dadurch gekennzeichnet, daß der Speicher - (2) byteorientiert ist und am Ausgang des Speichers (2) eine Einrichtung (7) vorgesehen ist, zur Auswahl eines der Ausgänge ($D_0$ bis $D_x$) am Speicher (2), der auf den Dateneingang (D) der ersten D-Flipflopstufe (5) geführt ist.

0 208 843

Fig 1

Fig. 2a

Fig. 2b

Fig 3a

$1$  binäre
$0$  Daten

Fig 3b

Ausgangs-
Signal

$f_1$

$f_2$